# EUROPÄISCHE PATENTSCHRIFT

(11) **EP 0 337 267 B1**
(45) Veröffentlichungstag und Bekanntmachung des Hinweises auf die Patenterteilung: **29.12.1993**
(21) Anmeldenummer: 89105933.9
(22) Anmeldetag: 05.04.1989
(51) Int. Cl.: H04B 7/26

(54) **Verfahren und Anordnungen zum Reduzieren von Frequenzablagen beim Mobilfunk über Satellit**
Method and arrangement for reducing frequency-deviations in a mobile satellite communication
Méthode et dispositif de réduction des dérives de fréquence dans une transmission radio-mobile par satellite

(30) Priorität: 14.04.1988 DE 3812382
(43) Veröffentlichungstag der Anmeldung: 18.10.1989
(73) Patentinhaber: ANT Nachrichtentechnik GmbH, D-71522 Backnang (DE)
(72) Erfinder: Milcz, Wilhelm, Dipl.-Ing., D-7064 Remshalden (DE)

(56) Entgegenhaltungen:
- DE-A- 3 508 069
- PATENT ABSTRACTS OF JAPAN, Band 9, Nr. 147 (E-323)[1870], 21. Juni 1985 & JP-A-60 27 245
- THIRD INTERNATIONAL CONFERENCE ON SATELLITE SYSTEMS FOR MOBILE COMMUNICATIONS AND NAVIGATION, London, 7.-9. Juni 1983, Seiten 135-139; R.L. Harris et al.: "Satellite communications to a vehicle on the move"

## Beschreibung

Die vorliegende Erfindung geht aus von einem Verfahren und Anordnungen zum Reduzieren von Frequenzablagen von vorgegebenen Frequenzkanälen, die zur Nachrichtenübertragung zwischen Feststationen und mobilen Teilnehmern über Satelliten vorgesehen sind.

Ein Mobilfunksystem, in dem ein Satellit als Relaistation zum Einsatz kommt, ist aus dem Konferenzbericht "The national Telesystem conference", 7.-10. Nov. 1982 in Galveston USA, Abschn. B1.3.1-B1.3.5, IEEE Katalog Nr. 82CH1824-2 bekannt.

Für ein Mobilfunksystem steht ein vorgegebener Frequenzbereich zur Verfügung, der in eine Vielzahl von Frequenzkanälen aufgeteilt ist, in denen Nutzsignale, das sind vorzugsweise Sprachsignale, zwischen den Feststationen und den mobilen Teilnehmern übertragen werden. Außerdem ist ein Frequenzbereich mit einer Vielzahl von sogenannten Signalisierungskanälen vorgesehen, in denen die einzelnen mobilen Teilnehmer mit den Feststationen über den Satelliten vor der Nutzsignalübertragung Kontakt aufnehmen. Diese Signalisierungs- wie auch die Nutzsignalfrequenzkanäle können nicht beliebig dicht zusammenliegen, da es sonst aufgrund von störenden Frequenzablagen, die z. B. durch Oszillatorinstabilitäten der Sender und Empfänger oder durch den Dopplereffekt entstehen, zu Interferenzen zwischen benachbarten Frequenzkanälen kommt. Deshalb sind Schutzfrequenzbänder zwischen den einzelnen Frequenzkanälen vorzusehen.

Es ist nun die Aufgabe der Erfindung, ein Verfahren und Anordnungen der eingangs genannten Art anzugeben, womit die Frequenzablagen möglichst weitgehend reduziert werden können, so daß die Schutzfrequenzbänder zwischen den Frequenzkanälen klein gewählt werden können und demzufolge ein zur Verfügung stehender Frequenzbereich in möglichst viele Frequenzkanäle aufgeteilt werden kann. Dies soll mit möglichst geringem Aufwand erreicht werden.

Erfindungsgemäß wird diese Aufgabe durch ein im Anspruch 1 angegebenen Verfahren und zwei aus den Ansprüchen 2 und 3 hervorgehende Anordnungen gelöst.

Nach dem Verfahren der Erfindung werden im Satelliten keine Maßnahmen zur Reduktion von Frequenzablagen ergriffen, um im Satelliten aufwendige Schaltungsanordnungen zu vermeiden. Außerdem müssen die mobilen Teilnehmer nicht mit extrem langzeitstabilen Oszillatoren, die wegen ihres hohen Schaltungsaufwandes sehr teuer sind, ausgestattet werden.

Anhand von in der Zeichnung dargestellten Ausführungsbeispielen wird nachfolgend die Erfindung näher erläutert.

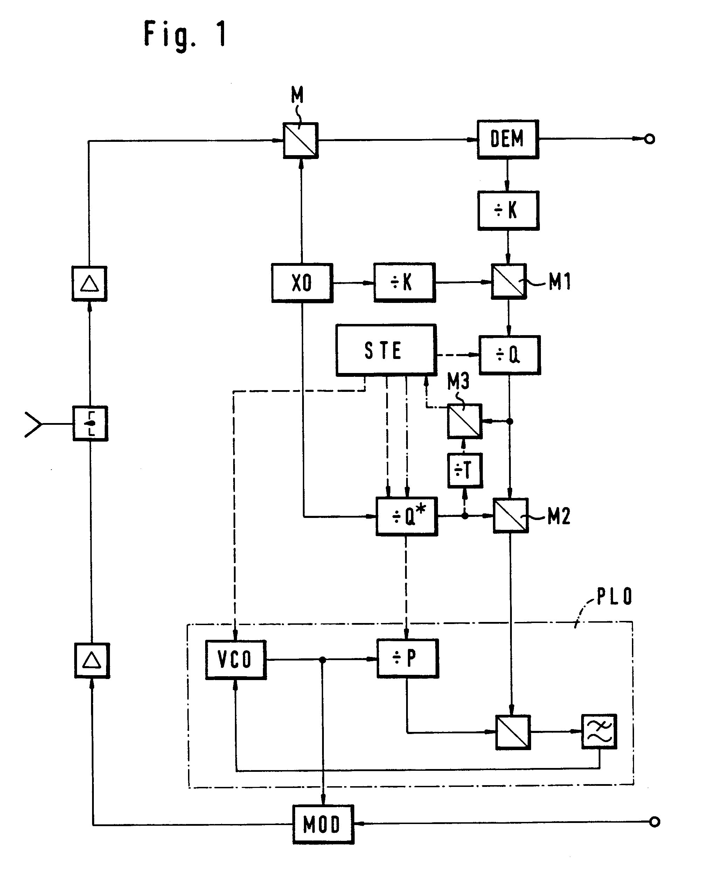

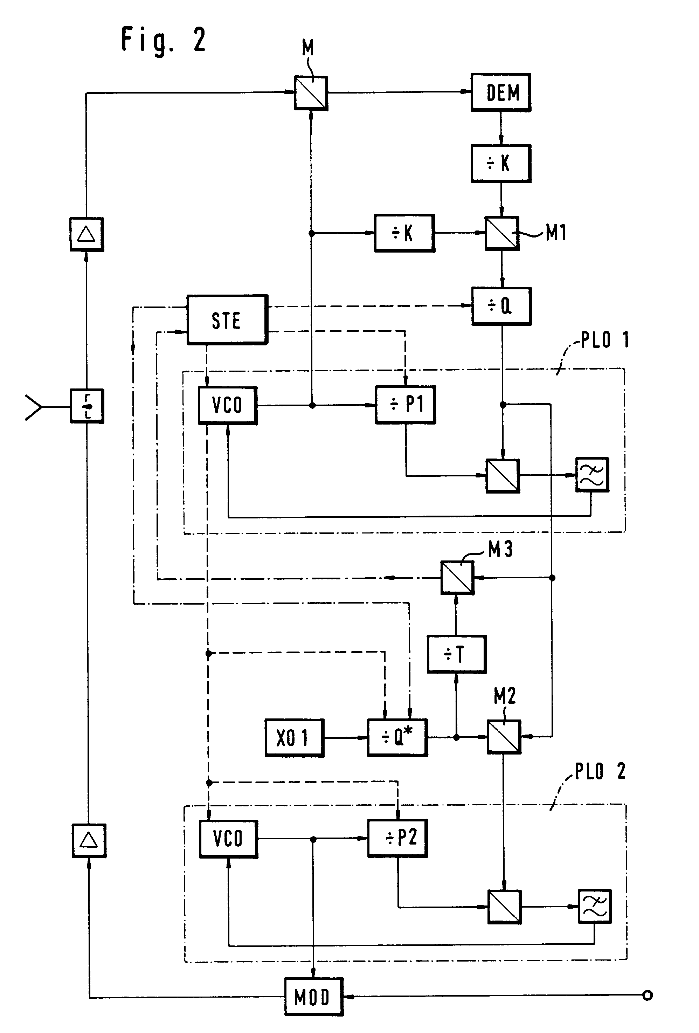

Figur 1 und 2 zeigen zwei verschiedene Schaltungskonzepte für die mobilen Teilnehmer.

Ein Mobilfunksystem besteht aus mehreren erdgebundenen Feststationen, die in einem großen Funkverkehrsgebiet verteilt aufgestellt sind, und einer Vielzahl von sich in diesem Funkverkehrsgebiet aufhaltenden mobilen Teilnehmern. Mit mobilen Teilnehmern sind hier z. B. Autos, Schiffe oder auch andere Verkehrsmittel gemeint, die mit einem Funk-Sende-Empfänger ausgestattet sind. Außerdem dient ein Satellit als Relaistation für die Nachrichtenübertragung zwischen den Feststationen, die mit terrestrischen Fernsprechnetzen verbunden sind, und den mobilen Teilnehmern.

Beabsichtigt z.B. eine Feststation, mit einem mobilen Teilnehmer eine Funkverbindung aufzunehmen, so sendet üblicherweise die Feststation die Kennung des mobilen Teilnehmers über den Satelliten an eine Kontroll-Feststation aus und diese überträgt die Kennung in einem Organisationskanal zurück zum Satelliten, der sie dann in den Funkverkehrsbereich, in dem sich der mobile Teilnehmer aufhält, ausstrahlt. Alle mobilen Teilnehmer empfangen den Organisationskanal, und nur derjenige mobile Teilnehmer, auf den die Kennung zutrifft, nimmt dann die Funkverbindung mit der rufenden Feststation auf. Geht umgekehrt von einem mobilen Teilnehmer ein Ruf an eine Feststation aus, so sendet der mobile Teilnehmer in einem ihm zugeordneten Signalisierungskanal diesen Ruf aus. Über den Organisationskanal erfährt der mobile Teilnehmer von der Kontroll-Feststation auch, auf welchem Nutzfrequenzkanal er für die anschließende Sprachsignalübertragung umzuschalten hat.

Damit nun im Laufe der Zeit die Frequenzdrift wegen mangelnder Oszillatorstabilität im mobilen Teilnehmer nicht zu groß wird, erfolgt in gewissen Zeitabständen immer wieder eine Frequenznachregelung. Und zwar initialisiert die Kontroll-Feststation über ihren Organisationskanal beim mobilen Teilnehmer eine Frequenznachregelung immer zu den Zeitpunkten, wenn der an der Nachrichtenübertragung beteiligte Satellit sich gerade im Apogäum seiner Erdumlaufbahn befindet. Im Apogäum nämlich, das ist der von der Erde am entferntesten liegende Punkt der elliptischen Erdumlaufbahn, ist die Entfernungsänderung zwischen dem Satelliten und den Feststationen bzw. den mobilen Teilnehmern nahezu Null. Demzufolge sind auch die Auswirkungen des Dopplereffekts vernachlässigbar gering; d.h. die der Oszillatorfrequenzdrift entgegenwirkende Frequenznachregelung kann weitgehend unbeeinflußt durch Dopplerfrequenzablagen durchgeführt werden.
Die Korrektur der Oszillatorfrequenzdrift ist vorteilhaft für die Genauigkeit der Signalisierungskanalfrequenzen wie auch der Nutzkanalfrequenzen.

Wegen der in relativ kurzen Zeitabständen, nämlich bei jedem Aprogäumsdurchlauf des Satelliten wiederholten Korrektur der Oszillatorfrequenz wird eine hohe Oszillatorfrequenzdrift vermieden, wie sie sich über längere Zeiträume einstellen könnte. Kleinere Frequenzdriften lassen sich mit geringerem Aufwand korrigieren als große Frequenzverschiebungen, zu deren Korrektur breitbandige Frequenznachführschaltungen erforderlich wären.

Wie weiter unten an zwei in den Figuren 1 und 2 gezeigten Schaltungskonzepten des mobilen Teilnehmers noch beschrieben wird, sind Mittel vorhanden, die eine durch den Dopplereffekt verursachte Frequenzablage kompensieren.

Die im mobilen Teilnehmer zu kompensierende Frequenzablage läßt sich vorteilhafterweise dadurch reduzieren, daß von der betreffenden Feststation die Signale bereits mit einem solchen Frequenzversatz ausgesendet werden, welcher einer in einem Funkverkehrsbereich (globale Ausleuchtzone oder Teil-Ausleuchtzone des Satelliten) aufgrund des Dopplereffekts auftretenden mittleren Frequenzablage entspricht. Im mobilen Teilnehmer muß dann nur noch die von dieser mittleren Doppler-Frequenzablage abweichende Restfrequenzablage kompensiert werden.

Prinzipiell besitzt jeder mobile Teilnehmer in seinem Empfangszweig einen Mischer M, der das empfangene Hochfrequenzsignal in ein Zwischenfrequenzsignal umsetzt, und einen daran angeschlossenen Demodulator DEM mit einer Regelschleife zur Trägerrückgewinnung. Im Sendezweig des mobilen Teilnehmers befindet sich ein Modulator MOD.

Beim Ausführungsbeispiel gemäß Figur 1 wird die Oszillatorfrequenz für den Mischer M im Empfangszweig von einem Freilaufoszillator XO und getrennt davon die Sendeträgerfrequenz von einem phasengeregelten Oszillator PLO erzeugt. Das dem Demodulator DEM zugeführte Trägersignal wird mit der Frequenz des Freilaufoszillators XO, nachdem beide Frequenzen durch den gleichen Teilfaktor K geteilt worden sind, von einem Mischer M1 umgesetzt. Das Ergebnis dieser Umsetzung ist die durch den Faktor K geteilte, durch den Mischer M in eine Zwischenfrequenzlage umgesetzte Trägerfrequenz des Empfangssignals. Letztere wird über einen Frequenzteiler mit dem Frequenzteilerverhältnis Q einem Mischer M2 zugeführt. Dieser Mischer M2 setzt die durch den Teilfaktor K·Q geteilte Empfangssignalträgerfrequenz mit der durch einen Teilfaktor Q* geteilten Frequenz des Freilaufoszillators XO um. Die aus dieser Frequenzumsetzung resultierende Frequenz dient als Referenzfrequenz für den phasengeregelten Oszillator PLO.

Eine Steuereinheit STE ist über strichliert angedeutete Steuerleitungen mit dem Mischer M2 vorgeschalteten Frequenzteilern und einem im phasengeregelten Oszillator PLO vorhandenen Frequenzteiler verbunden und stellt die Teilfaktoren Q, Q* und P der Frequenzteiler so ein, daß der mobile Teilnehmer auf den jeweils ihm von der Kontroll-Feststation zugeteilten Frequenzkanälen empfängt bzw. sendet.

Ist der Empfangssignalträger nicht mit einer Doppler-Frequenzablage beaufschlagt - das ist wie bereits erwähnt immer dann der Fall, wenn sich der Satellit im Apogäum seiner Erdumlaufbahn befindet - dann kann durch einen einfachen Umsetzvorgang ein der Frequenzdrift des Freilaufoszillators XO proportionales Signal abgeleitet werden. Und zwar dient dazu ein Mischer M3, dem einerseits der durch den Faktor K·Q geteilte Empfangssignalträger und andererseits das durch den Faktor Q* und den Faktor T eines weiteren Frequenzteilers geteilte Oszillatorsignal zugeführt ist. Bei entsprechender Wahl der Frequenzteilerfaktoren Q, Q* und T liefert der Mischer M3 das besagte, die Oszillatorfrequenzablage von seiner Sollfrequenz wiedergebende Signal. Dieses Signal wird, wie durch die strichpunktierten Linien angedeutet, an die Steuereinheit STE weitergeleitet, die daraus ein Steuersignal für den Frequenzteiler mit dem Teilerfaktor Q* ableitet. Das Steuersignal verändert den Teilerfaktor Q* des Frequenzteilers so, daß die am Ausgang des Frequenzteilers (Q*) erscheinende Frequenz gleich der Oszillator-Sollfrequenz ist.

Bewegt sich der Satellit außerhalb des Apogäums seiner Erdumlaufbahn, ist der Empfangssignalträger mit einer Frequenzablage behaftet, die auf den durch die Entfernungsänderung zwischen Satellit, Feststation und mobilem Teilnehmer hervorgerufenen Dopplereffekt zurückzuführen ist. Bei der vorangehend beschriebenen Schaltung erscheint am Ausgang des Mischers M2 der Empfangssignalträger gerade um die durch den Dopplereffekt hervorgerufene Frequenzablage, aber mit invertiertem Vorzeichen vesetzt. Bildlich ausgedrückt, ist die Frequenzablage des Mischerausgangssignals an der Frequenzablage des empfangenen Trägers gespiegelt. Diese gespiegelte Frequenzablage überträgt sich schließlich auf den vom phasengeregelten Oszillator PLO erzeugten Sendeträger. Wird nun dieser mit Frequenzablage beaufschlagte Sendeträger vom mobilen Teilnehmer über den Satelliten zur korrespondierenden Feststation ausgesendet, so wird diese Frequenzablage durch die in entgegengesetzte Richtung wirkende Doppler-Frequenzablage auf der Übertragungsstrecke kompensiert.

Ein gegenüber dem anhand von Fig. 1 beschriebenen Schaltungskonzept für einen mobilen Teilnehmer etwas verändertes zweites Schaltungskonzept ist der Figur 2 zu entnehmen. Hier sind diejenigen Schaltungseinheiten, welche die gleichen Funktionen wie entsprechende Schaltungseinheiten der ersten Ausführungen gemäß Figur 1 haben, auch mit gleichen Bezugszeichen versehen. Anders gegenüber der Ausführung gemäß Figur 1 ist bei dem in Figur 2 dargestellten mobilen Teilnehmer, daß die Oszillatorfrequenz für den Mischer M im Empfangszeig von einem phasengeregelten Oszillator PLO1 erzeugt wird. Es ist also ein erster phasengeregelter Oszillator PLO1 vorhanden, der die Oszillatorfrequenz für den Mischer M im Empfangszweig liefert, und ein zweiter phasengeregelter Oszillator PLO2 erzeugt die Sendeträgerfrequenz. Neben diesen beiden phasengeregelten Oszillatoren PLO1 und PLO2 gibt es noch einen Freilaufoszillator X01, der die Oszillatorfrequenz für den Mischer M2 liefert. Ansonsten sind die übrigen beim ersten Ausführungsbeispiel gemäß Figur 1 beschriebenen Schaltungsdetails bei dem in Figur 2 dargestellten Schaltungskonzept erhalten geblieben. Deren nochmalige Erläuterung erübrigt sich daher.

Ein Vorteil des in Fig. 2 dargestellten Schaltungskonzepts besteht darin, daß nur eine geringe Bandbreite für den im Schaltblock DEM vorhandenen Regelkreis für die Trägerrückgewinnung erforderlich ist, weil nämlich der phasengeregelte Oszillator PLO1 der Empfangssignalträgerfrequenz nachfolgt.

## Patentansprüche

1. Verfahren zum Reduzieren von Frequenzablagen von vorgegebenen Frequenzkanälen, die zur Nachrichtenübertragung zwischen Feststationen und mobilen Teilnehmern über Satelliten vorgesehen sind, dadurch gekennzeichnet, daß immer dann, wenn sich der an der Nachrichtenübertragung beteiligte Satellit gerade im Apogäum seiner Erdumlaufbahn befindet, in jedem mobilen Teilnehmer bei einer Frequenzablage von einer von ihm empfangenen Sollfrequenz aufgrund einer Oszillatorfrequenzdrift eine Frequenznachregelung auf die Sollfrequenz durchgeführt wird und daß dann, wenn sich der Satellit nicht im Apogäum seiner Umlaufbahn befindet, beim mobilen Teilnehmer eine derartige Frequenznachstimmung vorgenommen wird, daß die Frequenz, auf der ein Signal ausgesendet werden soll, gegenüber dem dafür vorgesehenen Sollfrequenzkanal um diejenige Frequenzablage, aber mit invertiertem Vorzeichen versetzt ist, welche ein vom mobilen Teilnehmer empfangenes Signal auf der Übertragungsstrecke durch den Dopplereffekt erfahren hat.

2. Anordnung zum Reduzieren von Frequenzablagen von vorgegebenen Frequenzkanälen, die zur Nachrichtenübertragung zwischen Feststationen und mobilen Teilnehmern über Satelliten vorgesehen sind, dadurch gekennzeichnet, daß der mobile Teilnehmer einen Freilaufoszillator (XO), dessen Frequenz zum Umsetzen eines Empfangssignals in eine für dessen Demodulation geeignete Frequenz dient, und einen phasengeregelten Oszillator (PLO) besitzt, der eine Senderträgerfrequenz erzeugt, daß Mittel (M2) vorhanden sind, die den regenerierten Empfangssignalträger mit der Frequenz des Freilaufoszillators (XO) in der Weise umsetzen, daß die daraus resultierende Frequenz dem Empfangssignalträger mit einer Frequenzablage entspricht, die gleich der invertierten Frequenzablage ist, welche das Empfangssignal auf der Übertragerstrecke durch den Dopplereffekt erfahren hat, daß diese Frequenz als Referenzfrequenz für den phasengeregelten Oszillator (PLO) dient, daß weitere Mittel (M3) zum Umsetzen des regenerierten Empfangssignalträgers mit der Frequenz des Freilaufoszillators (XO) vorhanden sind und diese beiden Frequenzen vor der Umsetzung mittels Frequenzteilern in solche Teilverhältnisse zueinander gebracht sind, daß aus der Umsetzung die Ablage der Frequenz des Freilaufoszillators (XO) von seiner Sollfrequenz hervorgeht, wenn bei der Lage des Satelliten im Apogäum das Empfangssignal keine Doppler-Frequenzverschiebung erfahren hat, und daß ein aus der Frequenzablage des Freilaufoszillators (XO) abgeleitetes Steuersignal den Teilerfaktor (Q*) eines dem Freilaufoszillator (XO) nachgeschalteten Frequenzteilers so verändert, daß dadurch die Frequenzablage des Freilaufoszillators (XO) korrigiert wird.

3. Anordnung zum Reduzieren von Frequenzablagen von vorgegebenen Frequenzkanälen, die zur Nachrichtenübertragung zwischen Feststationen und mobilen Teilnehmern über Satelliten vorgesehen sind, dadurch gekennzeichnet, daß der mobile Teilnehmer einen ersten phasengeregelten Oszillator (PLO1), dessen Frequenz zum Umsetzen eines Empfangssignals in eine für dessen Demodulation geeignete Frequenz dient, und einen zweiten phasengeregelten Oszillator (PLO2) besitzt, der eine Sendeträgerfrequenz erzeugt, daß als Referenzfrequenz für den ersten phasengeregelten Oszillator (PLO1) der regenerierte Empfangssignalträger dient, daß Mittel (M2) vorhanden sind, die den regenerierten Empfangssignalträger mit der Frequenz eines Freilaufoszillators (XO1) in der Weise umsetzen, daß die daraus resultierende Frequenz dem Empfangssignalträger mit einer Frequenzablage entspricht, die gleich der invertierten Frequenzablage ist, welche das Empfangssignal auf der Übertragerstrecke durch den Dopplereffekt erfahren hat, daß diese Frequenz als Referenzfrequenz für den zweiten phasengeregelten Oszillator (PLO2) dient, daß weitere Mittel (M3) zum Umsetzen des regenerierten Empfangssignalträgers mit der Frequenz des Freilaufoszillators (XO1) vorhanden sind und diese beiden Frequenzen vor der Umsetzung mittels Frequenzteilern in solche Teilverhältnisse zueinander gebracht sind, daß aus der Umsetzung die Ablage der Frequenz des Freilaufoszillators (XO1) von seiner Sollfrequenz hervorgeht, wenn bei der Lage des Satelliten im Apogäum das Empfangssignal keine Doppler-Frequenzverschiebung erfahren hat, und daß ein aus der Frequenzablage des Freilaufoszillators (XO1) abgeleitetes Steuersignal den Teilfaktor (Q*) eines dem Freilaufoszillator (XO1) nachgeschalteten Frequenzteilers so verändert, daß dadurch die Frequenz des Freilaufoszillators (XO1) korrigiert wird.

## Claims

1. Method for the reduction of frequency deviations of preset frequency channels which are provided for the transmission of communications between fixed stations and mobile subscribers by way of satellites, characterised thereby, that whenever the satellite participating in the transmission of communications is just situated in the apogee of its orbit about earth, a frequency adjustment to a target frequency is performed in each mobile subscriber in the case of a frequency deviation from the target frequency, which is received by him, by reason of an oscillator frequency drift and that whenever the satellite is not situated in the apogee of its orbit about earth, such a frequency adjustment is undertaken at the mobile subscriber that the frequency, on which a signal is to be emitted, is shifted relative to the target frequency channel provided therefor by that frequency deviation, but with inverted sign, which a signal received by the mobile subscriber has experienced due to the Doppler effect on the transmission path.

2. Arrangement for the reduction of frequency deviations of preset frequency channels which are provided for the transmission of communications between fixed stations and mobile subscribers by way of satellites, characterised thereby, that the mobile subscriber possesses a freewheel oscillator (XO), the frequency of which serves for the conversion of the received signal into a frequency suitable for its demodulation, and a phase-regulated oscillator (PLO), which generates a transmitter carrier frequency, that means (M2) are present, which convert the regenerated received signal carrier of the frequency of the freewheel oscillator (XO) in such a manner that the frequency resulting therefrom corresponds to the received signal carrier with a frequency deviation which is
equal to the inverted frequency deviation which the received signal has experienced due to the Doppler effect on the transmission path, that this frequency serves as reference frequency for the phase-regulated oscillator (PLO), that further means (M3) are present for the conversion of the regenerated received signal carrier by the frequency of the freewheel oscillator (XO) and both these frequencies are brought into such division ratios each relative to the other by means of frequency dividers before the conversion that the frequency deviation of the freewheel oscillator (XO) from its target frequency is evident from the conversion, when the received signal has experienced no Doppler frequency shift in the case of the position of the satellite in the apogee and that a control signal derived from the frequency deviation of the freewheel oscillator (XO) so changes the division ratio (Q*) of a frequency divider connected behind the freewheel oscillator (XO) that the frequency of the freewheel oscillator (XO) is corrected thereby.

3. Arrangement for the reduction of frequency deviations of preset frequency channels which are provided for the transmission of communications between fixed stations and mobile subscribers by way of satellites, characterised thereby, that the mobile subscriber possesses a first phase-regulated oscillator (PLO1), the frequency of which serves for the conversion of the received signal into a frequency suitable for its demodulation, and a second phase-regulated oscillator (PLO2), which generates a carrier frequency, that the regenerated received signal carrier serves as reference frequency for the first phase-regulated oscillator (PLO1), that means (M2) are present, which convert the regenerated received signal carrier of the frequency of a freewheel oscillator (XO1) in such a manner that the frequency resulting therefrom corresponds to the received signal carrier with a frequency deviation which is equal to the inverted frequency deviation which the received signal has experienced due to the Doppler effect on the transmission path, that this frequency serves as reference frequency for the second phase-regulated oscillator (PLO2), that further means (M3) are present for the conversion of the regenerated received signal carrier by the frequency of the freewheel oscillator (XO1) and both these frequencies are brought into such division ratios each relative to the other by means of frequency dividers before the conversion that the frequency deviation of the freewheel oscillator (XO1) from its target frequency is evident from the conversion, when the received signal has experienced no Doppler frequency shift in the case of the position of the satellite in the apogee and that a control signal derived from the frequency deviation of the freewheel oscillator (XO1) so changes the division ratio (Q*) of a frequency divider connected behind the freewheel oscillator (XO1) that the frequency of the freewheel oscillator (XO1) is corrected thereby.

## Revendications

1. Procédé pour réduire des dérives de fréquence de canaux de fréquences prédéterminés, prévus pour la transmission de messages entre des stations fixes et des abonnés mobiles en passant par des satellites, caractérisé en ce que, chaque fois que le satellite participant à la transmission de messages se trouve à l'apogée de son orbite terrestre, un rajustement de fréquence sur la fréquence de consigne est opéré dans chaque abonné mobile s'il existe une dérive de fréquence, par rapport à une fréquence de consigne reçue par lui, par suite d'un glissement de fréquence d'oscillateur, et que, lorsque le satellite n'est pas à l'apogée de son orbite, un tel rajustement de fréquence est effectué chez l'abonné mobile que la fréquence sur laquelle un signal doit être émis, présente, par rapport au canal de fréquence de consigne prévu pour cela, soit décalée de la dérive de fréquence, mais avec le signe inverse, qu'un signal reçu par l'abonné mobile a subie par l'effet Doppler sur la voie de transmission.

2. Dispositif pour réduire des dérives de fréquence de canaux de fréquences prédéterminés, prévus pour la transmission de messages entre des stations fixes et des abonnés mobiles en passant par des satellites, caractérisé en ce que l'abonné mobile possède un oscillateur libre (XO) dont la fréquence sert à convertir un signal de réception en une fréquence convenant pour sa démodulation, de même qu'un oscillateur à réglage de phase (PLO) qui génère une fréquence porteuse d'émission, que des moyens (M2) sont prévus pour convertir la porteuse de signal de réception régénérée avec la fréquence de l'oscillateur libre (XO), de manière que la fréquence qui en résulte corresponde à la porteuse de signal de réception avec une dérive de fréquence égale à la dérive de fréquence inversée que le signal de réception a subie sur la voie de transmission par l'effet Doppler, que cette fréquence sert de fréquence de référence pour l'oscillateur à réglage de phase (PLO), que des moyens supplémentaires (M3) sont prévus pour convertir la porteuse de signal de réception régénérée avec la fréquence de l'oscillateur libre (XO) et ces deux fréquences sont amenées, avant la conversion, au moyen de diviseurs de fréquence, à de tels rapports de division l'une par rapport à l'autre que la conversion fournit la dérive de la fréquence de l'oscillateur libre (XO), par rapport à sa fréquence de consigne, lorsque le signal de réception n'a pas subi de décalage de fréquence Doppler quand le satellite est à l'apogée, et qu'un signal de commande tiré de la dérive de fréquence de l'oscillateur libre (XO) modifie le facteur de division (Q*) d'un diviseur de fréquence monté à la suite de l'oscillateur libre (XO), de manière que la dérive de fréquénce de cet oscillateur soit ainsi corrigée.

3. Dispositif pour réduire des dérives de fréquence de canaux de fréquences prédéterminés, prévus pour la transmission de messages entre des stations fixes et des abonnés mobiles en passant par des satellites, caractérisé en ce que l'abonné mobile possède un premier oscillateur à réglage de phase (PLO1) dont la fréquence sert à convertir un signal de réception en une fréquence convenant pour sa démodulation, de même qu'un second oscillateur à réglage de phase (PLO2) qui génère une fréquence porteuse d'émission, que la porteuse de signal de réception régénérée sert de fréquence de référence pour le premier oscillateur à réglage de phase (PLO1), que des moyens (M2) sont prévus pour convertir la porteuse de signal de réception régénérée avec la fréquence d'un oscillateur libre (XO1), de manière que la fréquence qui en résulte corresponde à la porteuse de signal de réception avec une dérive de fréquence égale à la dérive de fréquence inversée que le signal de réception a subie par l'effet Doppler sur la voie de transmission, que cette fréquence sert de fréquence de référence pour le second oscillateur à réglage de phase (PLO2), que des moyens supplémentaires (M3) sont prévus pour convertir la porteuse de signal de réception régénérée avec la fréquence de l'oscillateur libre (XO1) et ces deux fréquences sont amenées, avant la conversion, au moyen de diviseurs de fréquence, a de tels rapports de division l'une par rapport à l'autre que la conversion fournit la dérive de la fréquence de l'oscillateur libre (XO1), par rapport à sa fréquence de consigne, lorsque le signal de réception n'a pas subi de décalage de fréquence Doppler quand le satellite est à l'apogée, et qu'un signal de commande tiré de la dérive de fréquence de l'oscillateur libre (XO1) modifie le facteur de division (Q*) d'un diviseur de fréquence monté à la suite de l'oscillateur libre (XO1), de manière que la dérive de fréquénce de cet oscillateur soit ainsi corrigée.
